# FASCICULE DE BREVET EUROPEEN

(11) **EP 0 631 070 B1**
(45) Date de publication et mention de la délivrance du brevet: **06.08.1997**
(21) Numéro de dépôt: 94401424.0
(22) Date de dépôt: 24.06.1994
(51) Int. Cl.: F16H 57/02, B60K 17/356

(54) **Dispositif de transmission pour véhicule automobile sans embrayage**
Kupplungslose Getriebevorrichtung für Kraftfahrzeuge
Clutchless transmission device for motor vehicles

(30) Priorité: 25.06.1993 FR 9307744
(43) Date de publication de la demande: 28.12.1994
(73) Titulaire: Société Anonyme dite: REGIE NATIONALE DES USINES RENAULT, 92109 Boulogne Billancourt (FR)
(72) Inventeur: Hamon, Hervé, F-75017 Paris (FR); Clerin, Régis, F-78260 Acheres (FR); Prenel, Jean-Marc, F-78730 St-Arnoult-en-Yvelines (FR)

(56) Documents cités:
- EP-A- 0 467 752
- DE-A- 2 305 481
- FR-A- 2 270 483
- FR-A- 2 393 199
- GB-A- 2 023 243
- US-A- 4 435 996
- US-A- 4 787 267
- US-A- 5 195 625

## Description

La présente invention se rapporte au domaine des transmissions. Plus précisément, elle concerne un dispositif de transmission assurant la réduction de la vitesse de rotation d'un moteur électrique, et l'entraînement des roues motrices d'un véhicule à partir de celui-ci.

Les moteurs électriques utilisés actuellement pour entraîner les véhicules automobiles tournent à un régime élevé, pouvant atteindre 12000 tours/mn en vitesses de pointe. L'absence de ralenti et la grande souplesse de tels moteurs, permettent à ces derniers d'entraîner un véhicule, sans embrayage ni boîte de vitesses. La réduction de vitesse requise pour entraîner les arbres de roues nécessite cependant l'intégration d'un mécanisme réducteur, dans la chaîne de transmission du véhicule.

Par la publication FR-A-2 645 684, on connaît un mécanisme d'entraînement pour véhicule électrique, comportant un moteur électrique, sur lequel est rapporté une boîte de vitesses étagée, présentant un arbre primaire coaxial à l'arbre de sortie du moteur, et un arbre secondaire, parallèle à celui-ci. Comme indiqué plus haut, les performances des moteurs électriques actuels permettent d'envisager une simplification d'un tel mécanisme d'entraînement, reposant sur la substitution d'un simple réducteur, à la boîte de vitesses.

Le problème sur lequel repose l'invention consiste à intégrer dans une chaîne de transmission de véhicule électrique, un mécanisme réducteur, en lieu et place d'une boîte de vitesses.

Ce problème est résolu en accouplant un arbre primaire de transmission, coaxial à l'arbre de sortie du moteur avec celui-ci, et en assurant la descente successive du mouvement de l'arbre primaire sur un arbre secondaire et sur un différentiel, au moyen d'un premier pignon fixé sur l'arbre primaire, d'un second pignon entraîné par le premier pignon et fixé sur l'arbre secondaire, et d'un troisième pignon fixé sur l'arbre secondaire, et engrenant avec la couronne du différentiel.

La transmission du mouvement par voie de denture entre un arbre de sortie de moteur tournant à vitesses élevée, et un arbre primaire de transmission, coaxial à celui-ci, sans embrayage, pose cependant un problème particulier, résultant de l'absence de réponse en flexion de l'arbre primaire aux défauts d'axialité de l'arbre moteur. En effet, sur les véhicules à moteur thermique, l'accouplement entre le moteur et la boîte de vitesses s'effectue par l'intermédiaire d'un embrayage, la distance entre les paliers de l'arbre d'embrayage étant suffisante pour amortir en torsion les défauts d'axialité existant entre le vilebrequin, et l'arbre primaire de la boîte de vitesses. En revanche, sur un véhicule sans embrayage, les défauts d'axialité de l'arbre moteur sont supportés intégralement par l'arbre d'entrée de la transmission. Si celui-ci est trop court, il ne sera pas en mesure de répondre en flexion à l'arbre moteur. Cette situation se traduit inévitablement par une usure anormale des cannelures d'accouplement de ces deux arbres, pouvant conduire à des ruptures de celles-ci.

L'invention résout également ce problème. Elle prévoit à cet effet que les moyens d'accouplement de l'arbre primaire sur l'arbre de sortie du moteur assurent la reprise en flexion, des défauts d'axialité de ce dernier.

L'intégration de moyens de réduction de vitesse dans une chaîne de transmission et l'adaptation dans celle-ci, de moyens de réponse en flexion aux défauts d'axialité de l'arbre moteur, proposées par l'invention, pose en outre un problème particulier, relatif à l'intégration d'un frein de parking. En effet, conformément aux dispositifs de changement de vitesses automatiques, équipant les véhicules thermiques, il est souhaitable que le dispositif de transmission équipant un véhicule électrique renferme une roue de parking, capable d'immobiliser l'ensemble de la transmission.

L'invention apporte également une solution au problème de l'intégration d'un frein de parking dans un véhicule électrique, en prévoyant l'adaptation d'une roue de parking sur l'arbre primaire.

D'autres caractéristiques et avantages de l'invention apparaîtront à la lecture de la description suivante de deux modes de réalisation particuliers de celle-ci, en liaison avec les dessins annexés, sur lesquels :
- la figure 1 est une coupe longitudinale d'un dispositif de transmission correspondant à un premier mode de réalisation de l'invention,
- la figure 2 est une coupe longitudinale d'un dispositif de transmission correspondant à un second mode de réalisation de l'invention, et
- la figure 3 est un agrandissement partiel de la figure 2.

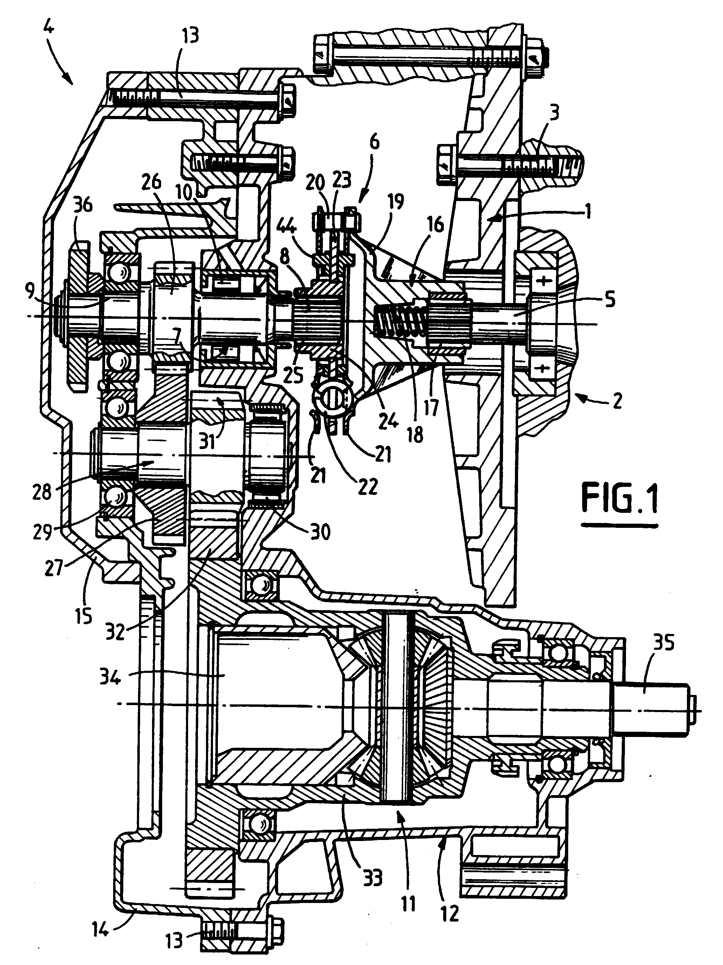

Sur la figure 1, on a représenté le flasque 1 d'un moteur 2, maintenu par des vis 3 sur celui-ci, et faisant face à un dispositif de transmission 4. Le flasque 1 est traversé par l'extrémité de l'arbre moteur 5, sur laquelle est monté un amortisseur 6. L'arbre primaire 7 du dispositif de transmission 4, coaxial à l'arbre moteur 5, est engagé par sa première extrémité 8, à l'intérieur de l'amortisseur 6, tandis que sa seconde extrémité 9, est supportée par des roulements 10. Le dispositif de transmission 4, ainsi que le différentiel 11, faisant suite à celui-ci dans la chaîne cinématique, sont disposés à l'intérieur d'un carter de différentiel 12, sur lequel sont maintenus par des vis de fixation 13, un carter intermédiaire 14, et un couvercle 15.

L'amortisseur 6 comporte un corps d'amortisseur 16, engagé sur des cannelures extérieures 17 de l'extrémité de l'arbre moteur 5. Un ressort hélicoïdal 18, disposé à l'intérieur du corps 16 de l'amortisseur 6, assure 1' élasticité axiale nécessaire à la liaison entre l'arbre moteur 5 et l'amortisseur 6. Le corps 16 de l'amortisseur 6 se prolonge par un flasque circulaire 19, traversé à proximité de sa périphérie par un ensemble de rivets 20, dont un représentant apparaît dans le plan de coupe. Les rivets 20 retiennent sur le flasque 19, deux tôles 21 assurant le maintien de plusieurs ressorts d'amortisseur 22, par exemple au nombre de six, dont un apparaît dans le plan de coupe. Les ressorts 22 sont engagés régulièrement au travers d'un voile 23, solidaire du moyeu 24 de l'amortisseur 6, qui est monté sur des cannelures extérieures 25 de l'arbre primaire 7, du dispositif de transmission 4.

Le dispositif de transmission 4 comporte un pignon primaire 26, noyé dans la masse de l'arbre primaire 7, en prise avec un pignon secondaire 27, porté par un arbre secondaire 28 supporté par deux roulements d'extrémité 29 et 30. L'arbre secondaire 28 porte un pignon de descente 31, entraînant de façon classique la couronne 32 solidaire du boîtier 33 du différentiel 11. La transmission du mouvement de l'arbre primaire 7, à l'arbre secondaire 28, et à la couronne 32, assure la réduction de vitesse nécessaire à l'entraînement des arbres de roues (non représentés), par les deux sorties de mouvement 34, 35, du différentiel 11. Une roue de parking 36, connue en soi, est placée en extrémité de l'arbre primaire 7. Le couple fourni par l'arbre moteur 5 transite par le corps 16 de l'amortisseur 6, les rivets 20, les tôles de maintien 21, les ressorts 22, le voile 23 et le moyeu 24 de l'amortisseur 6, avant d'être repris par l'arbre primaire 7. L'amortissement des défauts d'axialité de l'arbre moteur 5 est donc réalisé, entre les tôles 21 et le voile 23, grâce aux ressorts 22, tandis qu'un un ensemble de butées 44, dont l'une apparaît sur le plan de coupe, contrôle leur frottement.

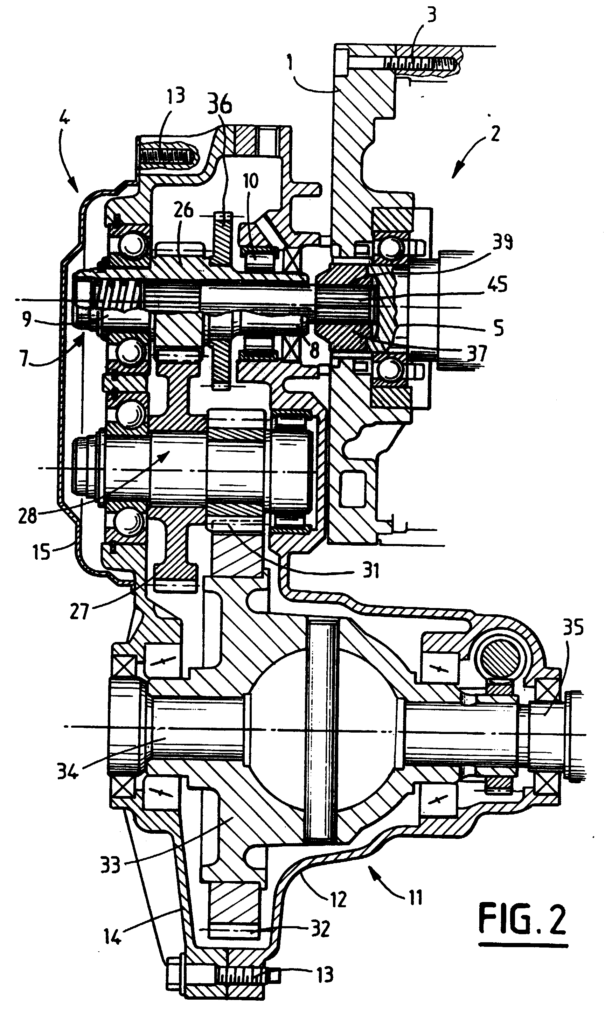

Sur la figure 2, on reconnait la plupart des éléments mentionnées sur la figure 1 à l'exception de l'amortisseur 6, car la ligne primaire du dispositif de transmission 4 est directement couplée à l'arbre 5 du moteur 2. L'ensemble constitué par le dispositif de transmission 4 et le différentiel 11, disposé à l'intérieur du carter de différentiel 12, du carter intermédiaire 14, et du couvercle 15, peut donc être directement placé contre le flasque 1 du moteur 2.

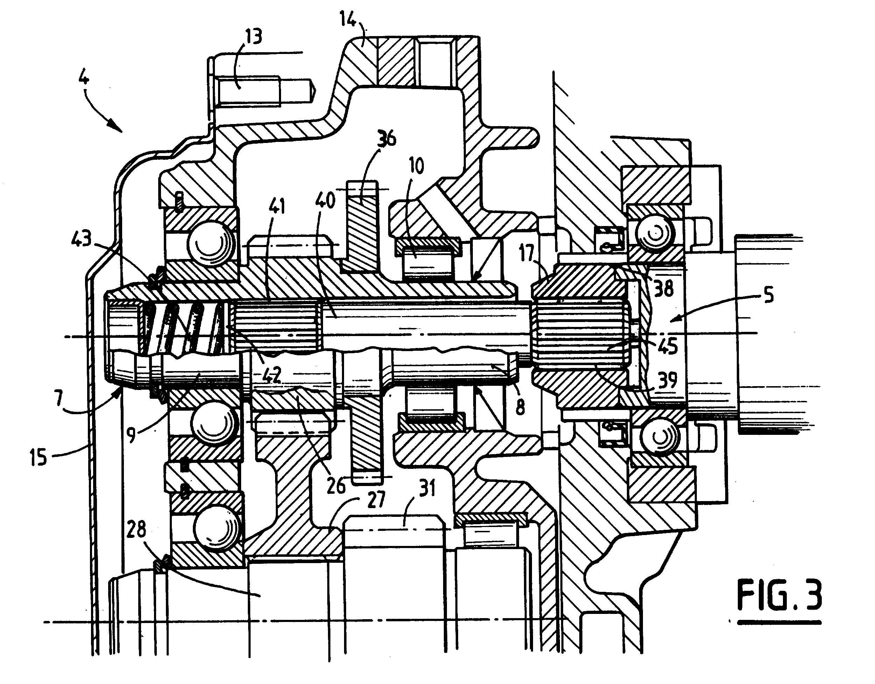

En se reportant à la figure 3, on voit que l'extrémité de l'arbre 5 du moteur 2 présente un manchon d'extrémité creux 37, maintenu par un cordon de soudure 38 sur celui-ci, et présentant des cannelures 39, à l'intérieur desquelles est engagée une première extrémité 45 d'un arbre intérieur ou arbre de torsion 40, s'étendant à l'intérieur de l'arbre primaire 7 du dispositif de transmission 4. La coupe de la figure 3, effectuée pour partie à l'intérieur de l'arbre primaire 7, et pour partie à l'extérieur de celui-ci, fait apparaître des cannelures intérieures 41 de l'arbre primaire, en prise sur la seconde extrémité 42 de l'arbre de torsion 40, opposée au moteur 2. L'arbre de torsion 40 est donc maintenu par des premières et des secondes cannelures 39, 41, à l'intérieur du manchon d'extrémité 37 de l'arbre 5 du moteur 2, d'une part, et à l'intérieur de l'arbre primaire 7, d'autre part. Un ressort d'extrémité 43 repousse élastiquement l'arbre de torsion 40 en direction du moteur 2. Conformément à l'invention, la longueur de l'arbre de torsion 40, déterminée par la distance entre les premières et les secondes cannelures 39, 41, est suffisante pour répondre en flexion aux défauts d'axialité de l'arbre moteur 5. Le mode de réalisation de l'invention illustré par la figure 2, permet donc de supprimer l'amortisseur 6, présent sur la figure 1. Le couple transite par les premières cannelures 39, l'arbre de torsion 40, et les secondes cannelures 41, avant d'être repris par l'arbre primaire 7. Enfin, on remarquera que la roue de parking 36 a pu être placée entre les roulements 10 supportant l'arbre primaire 7, et le pignon primaire 26. Cette disposition, autorisée par la suppression de l'amortisseur 6, contribue à rendre particulièrement compact le dispositif de transmission illustré par les figures 2 et 3.

En conclusion, il faut souligner que le dispositif de transmission de l'invention, intègre dans les deux modes de réalisation proposés les fonctions de réducteur, d'amortisseur, et de transfert du mouvement sur le différentiel. L'adaptation dans la chaîne de transmission, d'un arbre de torsion intérieur, dont la longueur est suffisante pour répondre en torsion aux défauts d'axialité de l'arbre moteur, porté à ses deux extrémités par des cannelures intérieures situées respectivement à l'intérieur de l'arbre moteur et à l'intérieur de l'arbre primaire, est particulièrement avantageuse, car elle permet de supprimer un organe volumineux et coûteux dans la chaîne de transmission.

## Revendications

1. Dispositif de transmission pour véhicule automobile sans embrayage comportant un arbre primaire (7) coaxial à l'arbre (5) du moteur électrique (2) d'un véhicle et sur lequel est fixé un premier pignon (26), un arbre secondaire (28), parallèle à l'arbre primaire (7), sur lequel sont fixés un second pignon (27) entraîné par le premier pignon (26) et un troisième pignon (31) engrenant avec la couronne (32) d'un différentiel (11), caractérisé en ce que l'arbre primaire (7) est accouplé à l'arbre (5) du moteur (2) par l'intermédiaire de moyens d'accouplement (6, 40), assurant la reprise en flexion des défauts d'axialité de ce dernier.

2. Dispositif de transmission selon la revendication 1, caractérisé en ce que les moyens d'accouplement, sont constitués par un amortisseur de torsion (6).

3. Dispositif de transmission selon la revendication 2, caractérisé en ce que l'amortisseur (6) présente un corps d'amortisseur (16), solidaire de l'arbre (5) du moteur (2), un moyeu (24), solidaire de l'arbre primaire (7), et plusieurs ressorts d'amortissement (22).

4. Dispositif de transmission selon la revendication 3, caractérisé en ce que les ressorts (22) sont maintenus entre deux tôles (21), solidaires du corps d'amortisseur (16), et engagés au travers d'un voile (23) solidaire du moyeu (24).

5. Dispositif de transmission selon l'une quelconque des revendications précédentes, caractérisé en ce que l'arbre primaire (7) porte une roue de parking (36).

6. Dispositif de transmission selon la revendication 1, caractérisé en ce que les moyens d'accouplement (40) sont constitués par un arbre de torsion (40), disposé à l'intérieur de l'arbre primaire (7).

7. Dispositif de transmission selon la revendication 6, caractérisé en ce que l'arbre de torsion (40) est fixé par une première extrémité (45) sur l'arbre (5) du moteur (2), et par une seconde extrémité (42), sur l'arbre primaire (7).

8. Dispositif de transmission selon la revendication 7, caractérisé en ce que la première extrémité (45) de l'arbre de torsion (40) est engagée à l'intérieur de premières cannelures (39), ménagées dans un manchon (37) rapporté sur l'arbre de sortie (5) du moteur (2), et en ce que la seconde extrémité (42) de l'arbre de torsion (40) est engagée dans des secondes cannelures (41), à l'intérieur de l'arbre primaire (7).

9. Dispositif de transmission selon les revendications 5 à 8, caractérisé en ce que la roue de parking (36) est disposée entre le premier pignon (26) et l'extrémité (8) de l'arbre primaire (7) la plus proche du moteur (2).

## Patentansprüche

1. Getriebevorrichtung für ein Kraftfahrzeug ohne Kupplung mit einer ersten Welle (7), die zur Welle (5) des Elektromotors (2) eines Fahrzeugs koaxial verläuft und an der ein erstes Ritzel (26) angebracht ist, und einer zweiten Welle (28), die zur ersten Welle (7) parallel verläuft, an der ein zweites Ritzel (27), das durch das erste Ritzel (26) angetrieben ist, und ein drittes Ritzel (31) befestigt sind, das mit dem Kranz (32) eines Differentials (11) in Eingriff steht,
dadurch gekennzeichnet, daß die erste Welle (7) an die Welle (5) des Motors (2) mittels einer Kupplungseinrichtung (6, 40) gekuppelt ist, wodurch die Biegungskorrektur der mangelnden Axialität dieser Welle gewährleistet ist.

2. Getriebevorrichtung nach Anspruch 1,
dadurch gekennzeichnet, daß die Kupplungseinrichtung durch einen Torsionsdämpfer (6) gebildet ist.

3. Getriebevorrichtung nach Anspruch 2,
dadurch gekennzeichnet, daß der Dämpfer (6) einen Dämpferkörper (16) aufweist, der mit der Welle (5) des Motors (2) fest verbunden ist, eine Nabe (24), die mit der ersten Welle (7) fest verbunden ist, und mehrere Dämpfungsfedern (22).

4. Getriebevorrichtung, nach Anspruch 3,
dadurch gekennzeichnet, daß die Federn (22) zwischen zwei Blechen (21) gehalten sind, die mit dem Dämpfungskörper (16) fest verbunden sind, und durch eine Abdeckung (23) hindurchgreifen, die mit der Nabe (24) fest verbunden ist.

5. Getriebevorrichtung nach einem der vorangehenden Ansprüche,
dadurch gekennzeichnet, daß die erste Welle (7) ein Feststellrad (36) trägt.

6. Getriebevorrichtung nach Anspruch 1,
dadurch gekennzeichnet, daß die Kupplungseinrichtung (40) durch eine Verdrehwelle (40) gebildet ist, die im Innern der ersten Welle (7) angeordnet ist.

7. Getriebevorrichtung nach Anspruch 6,
dadurch gekennzeichnet, daß die Verdrehwelle (40) durch ein erstes Ende (45) an der Welle (5) des Motors (2), und durch ein zweites Ende (42) an der ersten Welle (7) befestigt ist.

8. Getriebevorrichtung nach Anspruch 7,
dadurch gekennzeichnet, daß das erste Ende (45) der Verdrehwelle (40) in das Innere von ersten Hohlkehlen (39) eingerückt ist, die in einer Muffe (37) angeordnet sind, die an der Abtriebswelle (5) des Motors (2) angesetzt ist, und daß das zweite Ende (42) der Verdrehwelle (40) in zweiten Hohlkehlen (41) innerhalb der ersten Welle (7) eingerückt ist.

9. Getriebevorrichtung nach Anspruch 5 bis 8,
dadurch gekennzeichnet, daß das Feststellrad (36) zwischen dem ersten Ritzel (26) und dem Ende (8) der ersten Welle (7), die dem Motor (2) am nächsten liegt, angeordnet ist.

## Claims

1. A transmission device for an automobile vehicle with no clutch comprising a primary shaft (7) coaxial with the shaft (5) of the electric motor (2) of a vehicle and on which there is fixed a first pinion (26), a secondary shaft (28), parallel to the primary shaft (7), on which there are fixed a second pinion (27), driven by the first pinion (26), and a third pinion (31) engaging with the crown gear (32) of a differential (11), characterised in that the primary shaft (7) is coupled to the shaft (5) of the motor (2) by means of coupling means (6, 40) ensuring the recovery by bending of the axial defects of this latter.

2. A transmission device as claimed in claim 1, characterised in that the coupling means are formed by a torsion damper (6).

3. A transmission device as claimed in claim 2, characterised in that the damper (6) has a damper body (16) rigid with the shaft (5) of the motor (2), a hub (24) rigid with the primary shaft (7) and a plurality of damper springs (22).

4. A transmission device as claimed in claim 3, characterised in that the springs (22) are held between two sheets (21) rigid with the damper body (16) and engaged via a disc (23) rigid with the hub (24).

5. A transmission device as claimed in any one of the preceding claims, characterised in that the primary shaft (7) bears a parking wheel (36).

6. A transmission device as claimed in claim 1, characterised in that the coupling means (40) are formed by a torsion shaft (40) disposed within the primary shaft (7).

7. A transmission device as claimed in claim 6, characterised in that the torsion shaft (40) is secured by a first end (45) to the shaft (5) of the motor (2) and by a second end (42) to the primary shaft (7).

8. A transmission device as claimed in claim 7, characterised in that the first end (45) of the torsion shaft (40) is engaged within first grooves (39), provided in a sleeve (37) incorporated on the output shaft (5) of the motor (2) and in that the second end (42) of the torsion shaft (40) is engaged in second grooves (41) within the primary shaft (7).

9. A transmission device as claimed in claims 5 to 8, characterised in that the parking wheel (36) is disposed between the first pinion (26) and the end (8) of the primary shaft (7) closest to the motor (2).
